# EUROPEAN PATENT APPLICATION

(11) **EP 4 817 769 A1**
(43) Date of publication of application: **07.10.2026**
(21) Application number: 25167767.0
(22) Date of filing: 01.04.2025
(51) Int. Cl.: B23B 31/20, B23Q 7/04, B25J 15/00

(54) **METHOD FOR THE AUTOMATIC INSTALLATION OF A BACK PULL COLLET IN A MACHINE TOOL AND AUTOMATIC CLAMPING OF A BLANK**

(71) Applicant: Rollomatic SA, 2525 Le Landeron (CH)
(72) Inventor: Marty, Jean-Charles, 2520 La Neuveville (CH)
(74) Representative: P&TS SA (AG, Ltd.)

(57) **Abstract**

The present invention relates to a method for the automatic installation of a back pull collet (10) in a machine tool and automatic clamping of a blank (130) into the collet (10). The latter comprises a treaded portion (12), and flexible segments (17) defining a clamping housing (16). The machine tool comprises a headstock (100) including a spindle (101) arranged to be driven in rotation by a motor of the machine tool, a drawbar (104) arranged to be actuated by the machine tool's actuator, a collet adapter (112) connected to the spindle (101) and configured for receiving and clamping a back pull collet (10), a key (114) connected to the collet adapter (112), and a controlled device (116) for locking/unlocking the drawbar (104). The method comprises the following steps: i) controlling a robotic collet gripper (120) to grip a back pull collet (10) from a collet support, which holds a plurality of back pull collets designed for different blank diameters, and to insert the back pull collet (10) into the collet adapter (112) by means of the robotic collet gripper (120), ensuring that the key (114) of the adapter (112) engages with the keyway (14) of the collet (10); ii) operating the controlled device (116) to lock in rotation the drawbar (104) ; iii) partially screwing the threaded portion (12) of the back pull collet (10) into the threaded part (108) of the drawbar (104) by rotating the spindle (101) in a first direction; iv) loading a blank (130) or a reference bar into the clamping opening (16) of said collet (10); v) further screwing the threaded portion (12) of the back pull collet (10) into the threaded part (108) of the drawbar (104) by further rotating the spindle (101) in said first direction until the motor's current or torque of the machine tool increases upon contact of said blank (130) or reference bar with said flexible segments (17) and reaches a predetermined threshold value to calibrate the collet clamping opening (16) within a given diameter range, and vi) clamping the blank (130) to be machined by the actuating system (103).

## Description

### Field of the invention

The present invention relates to a method for the automatic installation of a back pull collet in a machine tool and automatic clamping of a blank in the back pull collet. More specifically, the method is adapted for the automatic installation in the machine tool of a collet comprising a threaded portion.

### Description of related art

During the machining of cutting tools on machine tools, it is essential to firmly secure the blanks to ensure precision and stability. In the domain of rotary cutting tools, these blanks are predominantly cylindrical in shape, necessitating specialized clamping devices for secure fastening. Various clamping mechanisms can be employed, including clamping mandrels with movable jaws, hydraulic mandrels with reduction sleeves, and back pull collets. Each of these systems offers distinct advantages depending on the machining requirements.

Among these clamping devices, back pull collets are the most widely used for holding cylindrical blanks due to their precision and reliability. These collets are highly specialized components, designed to clamp blanks based solely on their diameter. However, a major limitation of back pull collets is their inability to accommodate varying blank diameters without replacement. As a result, each time the diameter of the blank changes, the collet must be swapped out, leading to prolonged machine downtime. This frequent manual intervention significantly impacts productivity, particularly in CNC automatic machines where efficiency and continuous operation are critical.

Back pull collets typically incorporate either a bayonet or a threaded portion for secure attachment to the machine tool.

Back pull collets with a threaded portion are designed to be screwed into a threaded part located at the distal end of a drawbar in the machine tool. The drawbar is actuated by either a hydraulic or pneumatic piston or a spring, applying force along its longitudinal axis. During clamping, the drawbar retracts, pulling the collet back. To release the blank, the drawbar pushes the collet forward. A locking key mechanism integrated into the sleeve assembly ensures that the collet rotates with the sleeve, providing stability and alignment during operation.

To securely attach a back-pull collet with a threaded portion to the machine tool, the operator must typically perform the following steps:
- disengaging the drawbar from the spindle of the machine tool's headstock by loosening the locking screw, enabling it to rotate freely along its axis,
- Inserting the back pull collet into the headstock adapter at an angle that allows the key on the adapter to align with and slide into the keyway on the collet,
- manually rotating the drawbar to screw in the collet until its bore diameter exceeds that of the blank to be machined by approximately 0.05 to 0.1 mm. This clearance ensures smooth insertion of the blank, whether manually or automatically, and
- tightening the locking screw to secure the drawbar to the spindle of the headstock.

To address the limitations of traditional back pull collets, some CNC machine manufacturers have developed innovative systems that automatically adjust the clamping capacity to accommodate different blank diameters. These advanced systems typically utilize a reduction sleeve exchange mechanism within a hydraulic clamping device, thereby eliminating the need for manual collet replacement and significantly enhancing operational efficiency.

There is, however, no known system and method adapted for the automatic installation of a back pull collet with a threaded portion in a machine tool.

### Brief summary of the invention

An aim of the present invention is therefore to provide a method for automatic installation of a back pull collet in a machine tool and automatic clamping of a blank in the collet, wherein the collet comprises a threaded portion.

According to the invention, this aim is achieved notably by means of a method for the automatic installation in a machine tool of a back pull collet and automatic clamping of a blank into the collet. The latter comprises a treaded portion, and flexible segments defining a clamping opening. The machine tool comprises a headstock including a spindle arranged to be driven in rotation by a motor of the machine tool, a drawbar arranged to be actuated by an actuating system of the machine tool, a collet adapter connected to the spindle and configured for receiving and clamping a back pull collet, a key connected to the collet adapter, and a controlled device for locking/unlocking the rotation of the drawbar.

The method comprises the following steps: i) controlling a robotic collet gripper to grip a back pull collet from a collet support, which holds a plurality of back pull collets designed for different blank diameters, and to insert the back pull collet into the collet adapter by means of the robotic collet gripper, ensuring that the key of the adapter engages with the keyway of the collet; ii) operating the controlled device to lock in rotation the drawbar; iii) partially screwing the threaded portion of the back pull collet into the threaded part of the drawbar by rotating the spindle in a first direction; iv) loading a blank or a reference bar into the clamping opening of said collet; v) further screwing the threaded portion of the back pull collet into the threaded part of the drawbar by further rotating the spindle in said first direction until the motor's current or torque of the machine tool increases upon contact of said blank or reference bar with said flexible segments and reaches a predetermined threshold value to calibrate the collet clamping opening within a given diameter range, and vi) clamping the blank to be machined by the actuating system.

In an embodiment, step vi) of the above method comprises the additional steps of: a) driving the actuating system to actuate the drawbar forward to open the clamping opening to a predetermined diameter; b) further rotating the spindle in said first direction, and c) driving the actuating system to actuate the drawbar backward to clamp the blank into the clamping opening of the collet.

In an alternative embodiment, step vi) of the above method comprises the additional steps of : a) further rotating the spindle in a direction opposite to said first direction to open the clamping opening to a predetermined diameter, and b) driving the actuating system to actuate the drawbar backward to clamp the blank into the clamping opening of the collet.

In an embodiment, the reference bar is unloaded from the clamping opening and a blank to be machined is loaded into said opening between steps a) and b).

In an embodiment, the reference bar and the blank are handled by a robotic gripper different from the robotic collet gripper.

In an embodiment, the robotic collet gripper is controlled to position the collet in front of the headstock of the machine tool such that the longitudinal axis of said collet is aligned with the spindle axis. The collet gripper is then controlled to move the collet along the spindle axis until it is inserted into the collet adapter.

In an embodiment, step ii) of the above method comprises the steps of: a) controlling the robot so as to insert the back pull collet into the collet adapter with a movement along the longitudinal axis of the collet adapter until a rear side of said collet abuts the key of said adapter with a predetermined pressure on said rear side, and b) subsequently driving the motor of the machine tool to rotate the spindle until said key engages into the keyway of said collet.

In an embodiment, the plurality of back pull collets is arranged on the collet support in predefined positions so that their respective keyway are in the same angular position. The robotic collet gripper is controlled such that the gripped back pull collet is moved along the longitudinal axis of the collet adapter until the key of the collet adapter is engaged into the keyway of said collet.

In an embodiment, the robotic collet gripper comprises a locking system that prevents the back pull collet from rotating along its longitudinal axis when handled from the collets support up to the engagement of the key of the collet adapter into the keyway of said collet.

In an embodiment, the locking system comprises a mechanism configured to disengage the collet, enabling it to rotate to allow the spindle of the machine tool to drive said collet in rotation for screwing its threaded portion into the threaded part of the drawbar. This disengagement occurs once the key of the collet adapter is engaged in the keyway of the collet.

In an embodiment, the robotic collet gripper further comprises an elastic member, which is in a compressed or preloaded state when the locking system is in a locked configuration. The elastic member is arranged to be released when the back pull collet is disengaged from the robotic collet gripper in order to push the rear side of the collet in abutment against the distal thread of the threaded part of the drawbar.

In an embodiment, the movement speed of the robotic collet gripper is adjusted to the thread pitch of the back pull collet when the threaded portion of the back pull collet is partially screwed into the threaded part of the drawbar in step iv) of the above method.

In an embodiment, the controlled device comprises a blocking member arranged to move into an aperture arranged on the drawbar to block said drawbar in rotation and in translation.

In an embodiment, one of the spindle and the drawbar comprises a retractable connecting member while the other of said spindle and drawbar comprises at least one connecting member receiving part such that said drawbar is arranged to be driven in rotation by the spindle without any a collet installed to bring the system to operating temperature.

In an embodiment, the connecting member comprise a ball mounted on a spring housed in a cavity arranged on an inner side of an annular wall of the spindle while the connecting member receiving part comprise at least one recess provided on an outer surface of the drawbar adapted to receive the ball urged by the spring.

In an embodiment, the controlled device comprises a blocking member arranged to move into an aperture arranged on the drawbar to block said drawbar in rotation and in translation.

In an embodiment, step ii) consisting in operating the controlled device to lock in rotation the drawbar is performed before or after step i) consisting in controlling a robotic collet gripper to grip a back pull collet from a collet support, which holds a plurality of back pull collets designed for different blank diameters, and to insert the back pull collet into the collet adapter by means of the robotic collet gripper, ensuring that the key of the adapter engages with the keyway of the collet.

### Brief Description of the Drawings

The invention will be better understood with the aid of the description of embodiments given by way of examples and illustrated by the figures, in which:
- Figure 1 is a perspective view of a back pull collet featuring a threaded portion according to an embodiment;
- Figure 2 is a schematic cross-sectional view of the back pull collet mounted into a collet adapter within the headstock of a machine tool;
- Figure 3 is a schematic cross-sectional view showing the back pull collet and the machine tool headstock, with the collet held by a robot gripper and aligned with the spindle axis of the machine tool before coupling, wherein the drawbar is shown in a pulled configuration, according to an embodiment;
- Figure 4 is a similar view to Figure 3, wherein the blocking member of the controlled device has been actuated to be engaged with an aperture of the drawbar, preventing its rotation before the spindle's key engages with the collet's keyway as the gripper inserts the back pull collet;
- Figure 5 is a similar view to Figure 4, where the spindle's key is engaged with the collet's keyway and the spindle has been rotated relative to the drawbar, partially screwing the back pull collet into a predetermined position;
- Figure 6 is a similar view to Figure 5, with a blank loaded into the collet and the spindle further rotated relative to the drawbar until the motor driving the spindle reaches a predetermined torque or current.
- Figure 7 is a similar view to Figure 6, illustrating the blocking member of the controlled device disengaged from the aperture of the drawbar, allowing the spindle to rotate freely to machine the blank,
- Figure 8 is a schematic cross-sectional view of another embodiment, with the back pull collet held by a gripper, aligned with the spindle axis, and its keyway positioned in alignment with the spindle's key before coupling, and
- Figures 9a to 9b are block diagrams of the method steps according to different embodiments.

### Detailed Description of possible embodiments of the Invention

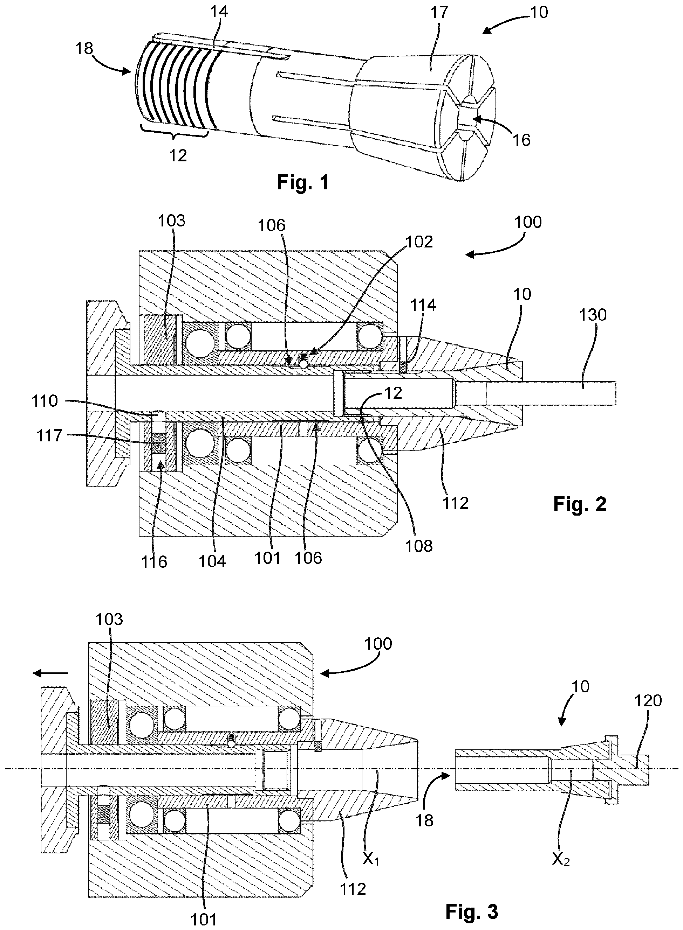

With reference to Figures 1 and 2, the headstock 100 of the machine tool is configured to implement a method for the automatic installation of a back pull collet in a machine tool and automatic clamping of a blank into the back pull collet, wherein the collet comprises a threaded portion. The headstock 100 comprises conventionally a spindle 101 arranged to be driven in rotation by a motor of the machine tool, a drawbar 104 arranged to be actuated by a machine tool's actuating system 103, a collet adapter 112 connected to the spindle 101 and configured for receiving and clamping a back pull collet 10, and a key 114 connected to the collet adapter 112.

The machine tool's actuating system 103, i.e. a pulling/pushing mechanism, may be incorporated into the headstock 100 as shown in the illustrated embodiments. This mechanism may be a hydraulic or pneumatic piston 103 or a spring acting on the drawbar 104 in the direction of its longitudinal axis to clamp/unclamped a bar, also known as a blank. For the sake of clarity, the component identified as part 103 will henceforth be referred to as the "piston" in this context. This designation will be used to avoid confusion and ensure a clear understanding of the component's role in the system. The term "piston" will be applied consistently throughout the description to indicate the part responsible for acting on the drawbar, regardless of its mechanical position or operational state.

The back pool collet 10 and the collet adapter 112 cooperate together to securely hold and release a blank to be machined through the radial expansion and contraction of flexible segments 17 of the collet as shown in Figure 1. In a conventional mechanism, the collet 10 is brought to a closed state when the drawbar 104 is pulled, causing the collet's flexible segments 17 to compress radially inward and securely tighten around the blank. Conversely, when the drawbar 114 is pushed, the collet transitions to an open state, allowing its flexible segments 117 to expand radially outward, loosening their grip and enabling the release of the machined blank.

The machine's headstock 100 has undergone specific modifications compared to a conventional design, where the collet change is done manually. These modifications enable the implementation of the method for the automatic installation of a back pull collet in the machine tool and automatic clamping of a blank into the collet, which will be described in detail later.

In some situations, the drawbar 104 and the spindle 101 of the headstock 100 may need to be rotated without a back pull collet installed to bring the system to operating temperature and ensure thermal stability for achieving precise tolerances. This practice is common in high-precision machining environments where thermal expansion can significantly affect accuracy.

In this respect, the drawbar 104 comprises a circular portion provided with one or more receiving portion 106, preferably a plurality of grooves or recesses 106 regularly spaced apart from each other around this circular portion. The spindle 101 of the headstock comprises a connecting member 102 arranged to engage one of the receiving portion 106 to ensure that the drawbar 104 is rotationally coupled with the spindle 101 when no back pull collet is installed which, under machining operations, connect the drawbar 104 to the spindle 101 through the mutual engagement between the adapter key and the collet keyway.

The connecting member 102 may comprise for example a ball mounted on a spring housed in a cavity arranged on an inner side of the spindle annular wall.

In addition, unlike conventional headstock, the machine's headstock 100 comprises a controlled device 116 to decouple the drawbar 104 from the rotation of the spindle 101. The controlled device 116 may have different configurations and may comprise for example a blocking member, such as a pin 117, configured to engage with an aperture 110 or any other component designed to accommodate the blocking member, and which is directly connected to the drawbar 104 so that the latter remains immobile while the spindle101 is rotating.

In a method for the automatic installation of a back pull collet in a machine tool and automatic clamping of a blank into the collet, the machine's control software is specifically programmed to manage the entire process depending on the initial position of the drawbar 104. The latter can be in one of two possible states: either a pulled (closed) state or a pushed (open) state. In the pulled state, the back pull collet is in its closed configuration, securely gripping the blank to hold it in place for machining operations. This state ensures that the collet is tightly engaged, preventing any movement of the blank during the machining process.

In contrast, when the drawbar is in the pushed state, the back pull collet is in its open configuration, creating space for the blank to be either loaded into or unloaded from the collet. The software may be adapted to perform the automatic installation of a back pull collet and automatic clamping of a blank into the collet whether the initial position of the drawbar is in a closed or open state.

Additionally, the machine's control software may further be adapted to perform the automatic installation of a back pull collet and automatic clamping of a blank into the collet for a variety of back pull collets adapted for blanks of different diameters mounted on a collet support (not shown) regardless of whether their respective keyways 14 are angularly indexed relative to the adapter's key 114 on the headstock 100.

Accordingly, the machine tool's control software may be programmed for the automatic installation of a back pull collet in the headstock of the machine tool and automatic clamping of a blank into the collet according to four different scenarios depending on both the initial state of the machine tool and the respective angular position of the back pull collets in the collet support, namely:
1. the machine tool's drawbar is in an initial pulled configuration and the back pull collets are not angularly indexed on the collet support,
2. the machine tool's drawbar is in an initial pulled configuration and the back pull collets are angularly indexed on the collet support,
3. the machine tool's drawbar is in an initial pushed configuration and the back pull collets are not angularly indexed on the collet support, and
4. the machine tool's drawbar is in an initial pushed configuration and the back pull collets are angularly indexed on the collet support.

The method uses a robot comprising a robotic collet gripper 120 to manipulate different back pull collets from the collet support comprising a set of collets in predefined positions, which are adapted for blanks of different diameters, to a final position where the threaded portion 12 of the collet is screwed into the threaded part 108 of the drawbar 104 of the machine tool as shown in Figure 2. The back pull collet support is preferably located inside the machine tool, either in the machining enclosure or in the area where the blanks are stored. In an embodiment, the back pull collets may be positioned on their support so that their keyway is in the same angular position.

In an embodiment, reference bars, each corresponding to the different diameters of the back pulled collets to be used, can be utilized for the installation of the back pull collet in the headstock of the machine tool. These reference bars, which represent the entire range of collet diameters that may be required, are preferably stored in close proximity to the specific collets that will be used in the operation. This ensures easy access and precise calibration of the collet opening for each specific diameter. The same robot with a different gripper (not shown) is used to manipulate the reference bars.

In another embodiment, blanks to be machined are directly used for adjusting the opening of the back pull collet.

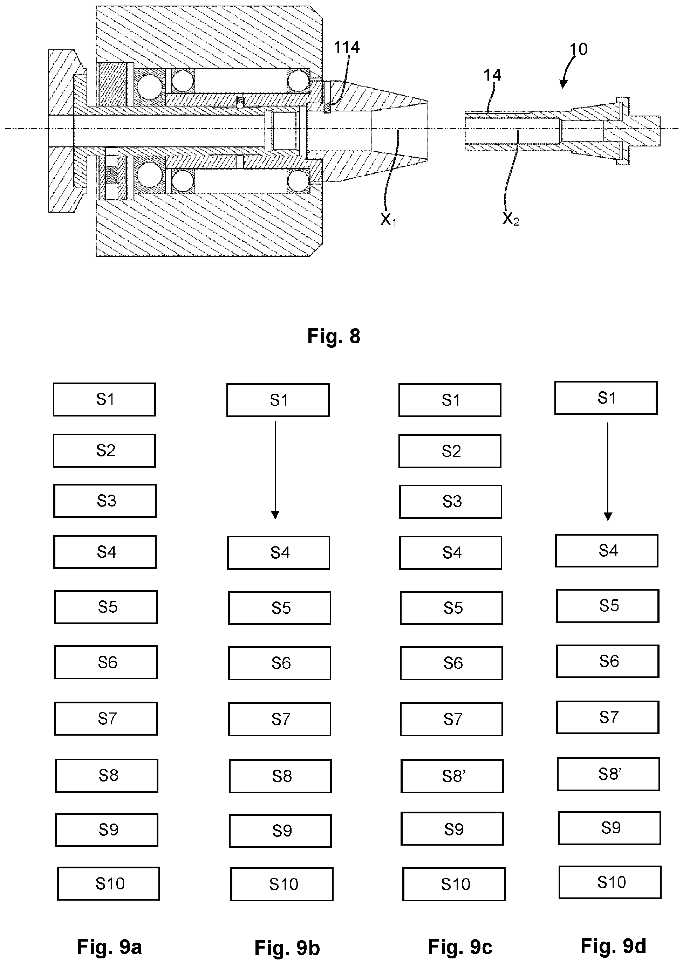

The method for the automatic installation of a back pull collet in the headstock of the machine tool and the automatic clamping of a blank into the collet will now be described according to one of the four possible scenarios described above by performing successive steps which differ according to the selected scenario. In this particular scenario represented by Figure 9a, the machine's control software is programmed to be in the closed state, whereby the drawbar 104 is in a pulled configuration. During this process, the back pull collet 10 is not angularly indexed relative to the headstock 100. The method comprises the following steps.

The robotic collet gripper 120 is first controlled to pick up a back pull collet from the collet support and moved it in a position face to face with the headstock 100 of the machine-tool such that its longitudinal axis X₂ is aligned with the rotational axis X₁ of the spindle 101 as shown in Figure 3 (Step 1). The robotic collet gripper 120 includes a locking system (not shown) that prevents the collet 10 from rotating along its longitudinal axis when handled from the collets support up to installation into the machine tool headstock.

The locking system comprises a mechanism configured to disengage the collet, enabling it to rotate while remaining securely held by the gripper for translational movement. This allows the spindle 101 to drive the collet in rotation for screwing its threaded portion 12 into the threaded part 108 of the drawbar 104, as described below. The disengagement occurs once the key 114 of the collet adapter 112 is engaged in the keyway of the collet 10, just before the spindle 101 starts rotating for the partial screwing of the collet as described subsequently.

In an advantageous embodiment, the robotic collet gripper 120 further comprises an elastic member (not shown), for example a compression spring, which is in a compressed or preloaded state when the locking system is in a locked configuration. The elastic member is arranged to be released when the back pull collet is disengaged from the robotic collet gripper in order to push the rear side 18 of the collet 10 in abutment against a distal thread of the threaded part 108 of the drawbar 104. The elastic member should however be regarded as optional as the robotic collet gripper 120 may be controlled to perform this last translation displacement according to a variant.

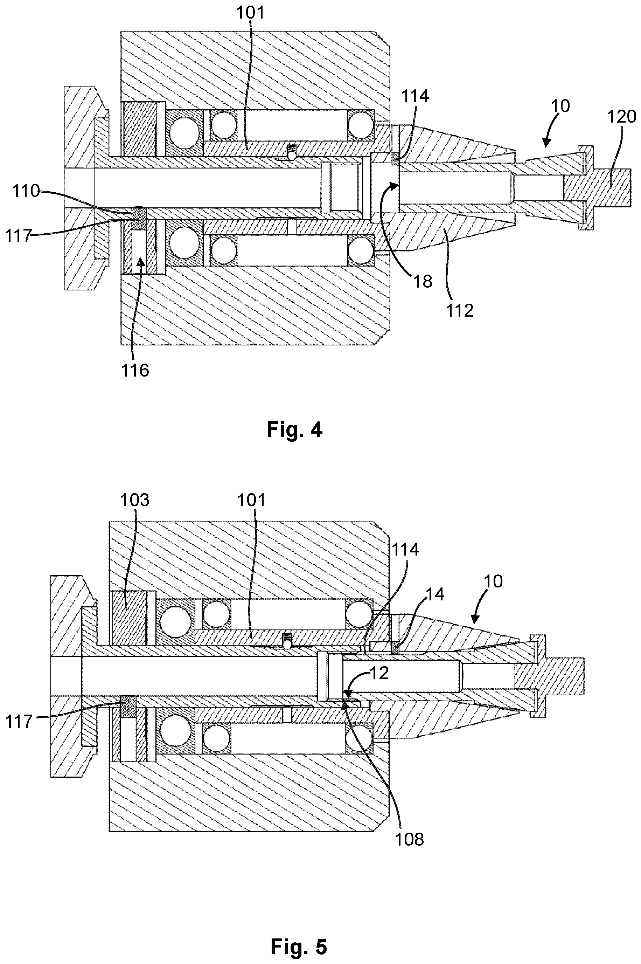

Once Step 1 is completed, the robotic collet gripper 120 is then controlled so as to move the collet 10 in translation along the longitudinal axis of the collet until a rear side 18 of the collet abuts the key 114 of the collet adapter 112 with a predetermined pressure as illustrated in Figure 4 (Step 2).

The machine tool's motor is then controlled by the control software to rotate the spindle 101 until the key 114 engages into the keyway 14 of the collet 10, whereupon the mechanism of the locking system disengages the collet so that it can be driven in rotation while the elastic member of the robotic collet gripper 120, or the collet gripper itself, pushes the rear side 18 of the collet 10 in abutment against a distal thread of the threaded part 108 of the drawbar 104 (Step 3).

The controlled device 116 is then actuated by the machine tool's control software so that the blocking member 117, for example a pin, engages a receiving portion 110, for example an aperture, located on the drawbar 104 thereby blocking its rotation (Step 4). The machine tool's software subsequently controls the machine tool's motor to rotate the spindle 101 around the drawbar 104 to partially screw the threaded portion 12 of the back pull collet 10 into the threaded part 108 of the drawbar as shown in Figure 5 (Step 5). In a variant, the controlled device 116 may be actuated prior to the step of gripping the back pull collets from the collet support.

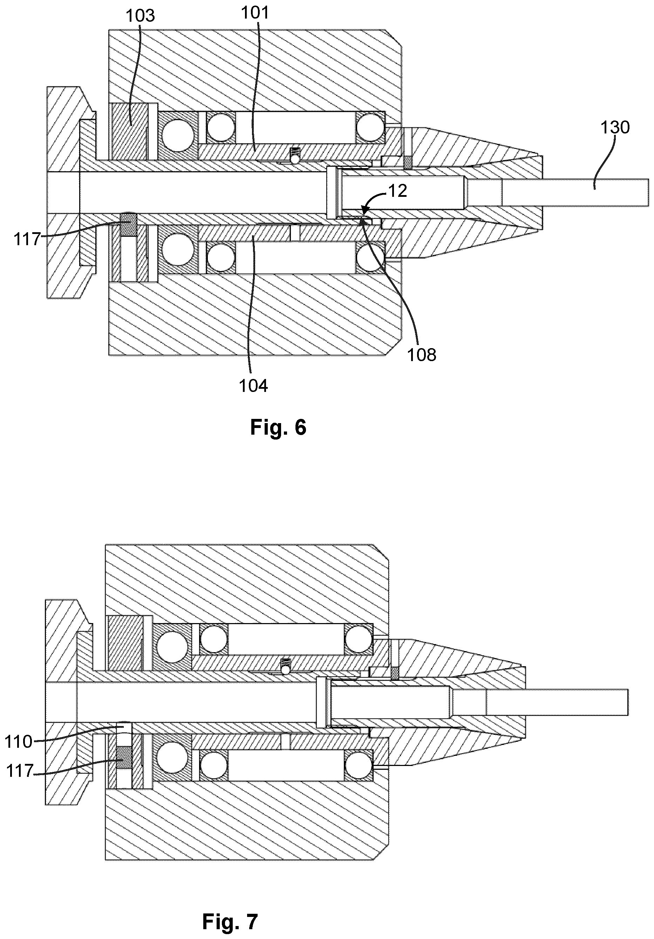

With reference to Figure 6, a blank 130 is then loaded into a clamping opening 16 of the collet 10 (Figure 1) using another robot gripper (Step S6). In another embodiment, a reference bar corresponding to a collet with a specific blank diameter may be loaded into the clamping opening 16 to calibrate such opening to a blank to be machined.

The spindle 101 is then further rotated in the same direction to screw the back pull collet further into the drawbar 104 so that it reaches a near-final screwing stage as shown in Figure 6 (Step S7). This reduces the collet clamping opening 16 until the machining tool's motor current reaches a predetermined threshold value, as measured by a current sensor, indicating that the collet's flexible segments 17 have made contact with the blank 130. This allows to calibrate the clamping opening 16 within a given diameter range so as to ensure a tight clamping of the blank to be machined. In another embodiment, the spindle may be further rotated until the motor's torque of the machine tool reaches a predetermined threshold value measured by a torque sensor.

The piston 103 of the actuating system is then operated to bring the drawbar 104 forward in order to allow the spindle 101 to be driven to perform an additional rotation of a few degrees still in the same direction, allowing the back pull collet to reach its final screwing stage (Step 8). The piston 103 of the actuating system is then actuated to pull the drawbar 104 backward, thereby firmly securing the blank in place (Step 9).

More particularly, when the drawbar 104 pulls back the collet 10, the collet adapter 112, also known as sleeve, which is integral with the spindle 101, compresses the conical part of the collet and clamps the blank 130. To release the blank, the piston 103 of the actuating system is controlled to actuate the drawbar 104 in opposite direction so as to push the collet 10 forward. The latter is secured in rotation to the collet adapter 12 by a key/prisoner 114 fixed in the sleeve.

Performing an additional spindle rotation of a few degrees before the actuation of the drawbar backward is critical, as the piston's limited stroke must generate sufficient clamping force

Indeed, the clamping force of the blank comes solely from the pneumatic or hydraulic pressure exerted by the piston 103 on the drawbar 104. Before the preliminary screwing of the back pull collet, the piston acting on the drawbar is at its mechanical end of travel, in the backward position. When the predetermined torque is reached during preliminary screwing, the piston does not yet move from its end-of-travel position as shown in Figure 6. It is the additional screwing that will allow the piston to leave its backward end-of-travel position.

In an embodiment whereby a reference bar is used to calibrate the clamping opening diameter of the back pull collet 10, Step 1 to Step 8 of the method according to the first scenario described above are identical except in Step 6 where the reference bar is loaded into the collet instead of the blank. The spindle 101 is then rotated in the opposite direction after Step 8 to slightly enlarge the collet clamping opening 16, typically by a range of 0.05 to 0.1 mm.

This controlled adjustment ensures that the opening is sufficiently sized to allow the removal of the reference bar and the subsequent introduction of a blank to be machined. The spindle 101 is then driven to perform the same additional rotation of a few degrees but in the opposite direction before driving the piston 103 of the actuating system to pull the drawbar 104 backward, thereby firmly securing the blank in place.

The computer program then controls the actuation of the controlled device 116 to unlock the drawbar 104 so that it can be rotated for machining operations on the blank 130 (Step 10).

In an embodiment corresponding to the second scenario mentioned above and represented in Figure 9b, the collets are arranged in the collet support so that their respective keyways share the same angular position. This configuration allows the robotic collet gripper 120 to be controlled to select the collet corresponding to the blank's diameter, position it in front of the machine tool's headstock 100 (as shown in Figure 8), and orient it such that its longitudinal axis X₂ is aligned with the spindle axis X₁. The collet adapter's key 114 is then engaged into the collet keyway 14 through a single translational movement of the robotic collet gripper 120 along the spindle axis, ensuring rapid collet installation.

The machine tool's control software has been programmed slightly differently to implement the method for the automatic installation of a back-pull collet 10 in a machine tool and the automatic clamping of a blank 130 into the collet according to the second scenario. More particularly, the control software has been programmed to reproduce Step 1 and Steps 4 through 10 of the method described according to the first scenario. However, instead of Steps 2 and 3, the engagement of the collet adapter's key 114 into the collet keyway 14 is achieved through a single translational movement of the robotic collet gripper 120 along the spindle axis.

According to the third scenario, represented in Figure 9c, where the machine tool's drawbar is an initial pushed configuration and the back pull collets are not angularly indexed on the collet support, the control software is programmed to reproduce Steps 1 through 7 of the method according to the first scenario. Step 7 is followed by Step 8' consisting in rotating the spindle 101 in the opposite direction to slightly enlarge the collet clamping opening 16, typically by a range of 0.05 to 0.1 mm. In this configuration, a blank 130 can be loaded in the opening by a gripper different from the robotic collet gripper. The piston 103 of the actuating system is then actuated to pull the drawbar 104 backward, thereby firmly securing the blank in place (Step 9). The computer program then controls the actuation of the controlled device 116 to unlock the drawbar 104 so that it can be rotated for machining operations on the blank 130 (Step 10).

According to the fourth scenario, represented in Figure 9d, the control software has been programmed to reproduce Step 1 and Steps 4 through 7 of the method described according to the first scenario. However, instead of Steps 2 and 3, the engagement of the collet adapter's key 114 into the collet keyway 14 is achieved through a single translational movement of the robotic collet gripper 120 along the spindle axis as mentioned above with regard to the second scenario. In addition, Step 7 is followed by Step 8' consisting in rotating the spindle 101 in the opposite direction to slightly enlarge the collet clamping opening 16, typically by a range of 0.05 to 0.1 mm so that a blank 130 can be loaded in the opening followed by Steps 9 and 10 as described above in relation to the third scenario so that the blank is ready for machining operation.

Various modifications and variations to the described embodiments of the invention will be apparent to those skilled in the art without departing from the scope of the invention as defined in the appended claims. For example, the drawbar may be locked in rotation prior to or right after controlling the robotic collet gripper to install the back pull collet in the machine tool whereby the key of the collet adapter engages the collet keyway.

### List of reference

Back pull collet 10
   Threaded portion 12
   Keyway 14
   Clamping opening 16
   Flexible segment 17
   Rear side 18
Headstock 100
   Spindle101
   Connecting member 102 (e.g. ball and spring)
   Actuating system 103 (e.g. pneumatic or hydraulic piston spring mechanism) Drawbar 104
      Recess 106 (e.g. groove)
      Threaded part 108
      Aperture 110
   Collet adapter 112
      Key 114
   Controlled device 116
      Blocking member 117 (e.g. pin)
Robotic collet gripper 120
Reference bar/blank 130
Spindle axis X₁
Collet axis X₂

## Claims

1. Method for the automatic installation in a machine tool of a back pull collet (10) and automatic clamping of a blank (130) into the back pull collet, said collet (10) comprising a treaded portion (12), and flexible segments (17) defining a clamping opening (16), wherein said machine tool comprises a headstock (100) including a spindle (101) arranged to be driven in rotation by a motor of the machine tool, a drawbar (104) arranged to be actuated by an actuating system (103) of the machine tool, a collet adapter (112) connected to the spindle (101) and configured for receiving and clamping a back pull collet (10), a key (114) connected to the collet adapter (112), and a controlled device (116) for locking/unlocking the rotation of the drawbar (104), the method comprising the following steps:
i) controlling a robotic collet gripper (120) to grip a back pull collet (10) from a collet support, which holds a plurality of back pull collets designed for different blank diameters, and to insert the back pull collet (10) into the collet adapter (112) by means of the robotic collet gripper (120), ensuring that the key (114) of the adapter (112) engages with the keyway (14) of the collet (10);
ii) operating the controlled device (116) to lock in rotation the drawbar (104) ;
iii) partially screwing the threaded portion (12) of the back pull collet (10) into the threaded part (108) of the drawbar (104) by rotating the spindle (101) in a first direction;
iv) loading a blank (130) or a reference bar into the clamping opening (16) of said collet (10),
v) further screwing the threaded portion (12) of the back pull collet (10) into the threaded part (108) of the drawbar (104) by further rotating the spindle (101) in said first direction until the motor's current or torque of the machine tool increases upon contact of said blank (130) or reference bar with said flexible segments (17) and reaches a predetermined threshold value to calibrate the collet clamping opening (16) within a given diameter range, and
vi) clamping the blank (130) to be machined by the actuating system (103).

2. Method according to claim 1, wherein step vi) comprises the additional steps of:
a) driving the actuating system (103) to actuate the drawbar (101) forward to open the clamping opening (108) to a predetermined diameter;
b) further rotating the spindle (101) in said first direction, and
c) driving the actuating system (103) to actuate the drawbar (101) backward to clamp the blank (130) into the clamping opening (103) of the collet (10).

3. Method according to claim 1, wherein step vi) comprises the additional steps of:
a) further rotating the spindle (101) in a direction opposite to said first direction to open the clamping opening to a predetermined diameter, and
b) driving the actuating system (103) to actuate the drawbar (101) backward to clamp the blank (130) into the clamping opening (103) of the collet (10).

4. Method according to claim 2 or 3, wherein said reference bar is unloaded from the clamping opening (108) and a blank (130) to be machined is loaded into said opening (108) between steps a) and b).

5. Method according to the preceding claim, wherein said reference bar and said blank are handled by a robotic gripper different from said robotic collet gripper (120).

6. Method according to the preceding claim, wherein said robotic collet gripper (120) is controlled to position the collet (10) in front of the headstock (100) of the machine tool such that the longitudinal axis (X₂) of said collet is aligned with the spindle axis (X₁) and to move said collet along the spindle axis (X₁) until it is inserted into the collet adapter (112).

7. Method according to any preceding claim, wherein step ii) comprising the steps of
controlling the robot so as to insert the back pull collet (10) into the collet adapter (112) with a movement along the longitudinal axis of the collet adapter (112) until a rear side (18) of said collet (10) abuts the key (114) of said adapter with a predetermined pressure on said rear side (18), and
subsequently driving the motor of the machine tool to rotate the spindle (101) until said key (114) engages into the keyway (14) of said collet (10).

8. Method according to any of claims 1 to 6, wherein said plurality of back pull collets is arranged on said collet support in predefined positions so that their keyway are in the same angular position and wherein the robotic collet gripper (120) is controlled such that the gripped back pull collet (10) is moved along the longitudinal axis of the collet adapter (112) until the key (114) of the collet adapter (112) is engaged into the keyway (14) of said collet (10).

9. Method according to claim 7 or 8, wherein the robotic collet gripper (120) includes a locking system that prevents the back pull collet (10) from rotating along its longitudinal axis when handled from the collets support up to the engagement of the key (114) of the collet adapter (112) into the keyway (14) of said collet (10).

10. Method according to the preceding claim, wherein the locking system comprises a mechanism configured to disengage the collet, enabling it to rotate to allow the spindle (101) of the machine tool to drive said collet (10) in rotation for screwing its threaded portion (12) into the threaded part (108) of the drawbar (104), wherein said disengagement occurs once the key (114) of the collet adapter (112) is engaged in the keyway (14) of the collet (10).

11. Method according to the preceding claim, wherein the robotic collet gripper (120) further comprises an elastic member, which is in a compressed or preloaded state when the locking system is in a locked configuration, wherein said elastic member is arranged to be released when the back pull collet (10) is disengaged from the robotic collet gripper (120) in order to push the rear side (18) of said collet (10) in abutment against the threaded part (108) of the drawbar (104).

12. Method according to any preceding claim, wherein the movement speed of the robotic collet gripper (120) is adjusted to the thread pitch of the back pull collet (10) when the threaded portion (12) of the back pull collet (10) is partially screwed into the threaded part (108) of the drawbar (104) in step iv).

13. Method according to any preceding claim, wherein the controlled device (116) comprises a blocking member (117) arranged to move into an aperture (110) arranged on the drawbar (104) to block said drawbar in rotation and in translation.

14. Method according to any preceding claim, wherein one of the spindle (101) and the drawbar (104) comprises a retractable connecting member (102) while the other of said spindle (101) and drawbar (104) comprises at least one connecting member receiving part (106) such that said drawbar (104) is arranged to be driven in rotation by the spindle (101) without any a collet installed to bring the system to operating temperature.

15. Method according to the preceding claim, wherein the connecting member (102) comprise a ball mounted on a spring housed in a cavity arranged on an inner side of an annular wall of the spindle (101) while the connecting member receiving part (106) comprise at least one recess provided on an outer surface of the drawbar (104) adapted to receive the ball urged by the spring.
